# EUROPÄISCHE PATENTSCHRIFT

(11) **EP 1 525 165 B1**
(45) Veröffentlichungstag und Bekanntmachung des Hinweises auf die Patenterteilung: **02.10.2013**
(21) Anmeldenummer: 03732538.8
(22) Anmeldetag: 05.06.2003
(51) Int. Cl.: C03B 5/235, C03B 5/12

(54) **VERFAHREN ZUR HERSTELLUNG VON DÄMMSTOFFEN AUS MINERALFASERN**
METHOD FOR PRODUCING INSULATING MATERIALS ON THE BASIS OF MINERAL FIBERS
PROCEDE DE PRODUCTION DE MATERIAUX ISOLANTS EN FIBRES MINERALES

(30) Priorität: 16.07.2002 DE 10232285
(43) Veröffentlichungstag der Anmeldung: 27.04.2005
(73) Patentinhaber: Deutsche Rockwool Mineralwoll GmbH & Co. OHG, 45966 Gladbeck (DE)
(72) Erfinder: NYKIEL, Guido, 45964 Gladbeck (DE); GONZ LEZ CAPARR S, Miguel, 47228 Duisburg (DE)
(74) Vertreter: Wanischeck-Bergmann, Axel
(86) Internationale Anmeldenummer: PCT/EP2003/005894
(87) Internationale Veröffentlichungsnummer: WO 2004/007380

(56) Entgegenhaltungen:
- US-A- 2 395 231
- US-A- 4 822 388

## Beschreibung

Die Erfindung betrifft ein Verfahren zur Herstellung von Dämmstoffen aus Mineral-fasern, insbesondere aus Glas- und/oder Steinwolle, bei dem in einem Schmelzaggregat, insbesondere einem Kupolofen, eine silikatische Schmelze hergestellt und in einer Zerfaserungseinrichtung in vorzugsweise mikrofeine Fasern zerfasert wird, den Fasern vorzugsweise Binde- und/oder Imprägnierungsmittel zugesetzt werden und die Fasern auf einer Fördereinrichtung als Vlies abgelegt werden.

Dämmstoffe aus Mineralfasern werden aus silikatischen Schmelzen hergestellt. Hierzu wird ein silikatisches Ausgangsmaterial, beispielsweise Gläser, natürliches oder künstliches Gestein einem Schmelzaggregat, beispielsweise einem Kupolofen oder einem Schachtofen zugeführt. Die hieraus gewonnene silikatische Schmelze wird sodann einem Zerfaserungsaggregat zugeführt, in dem die silikatische Schmelze in mikrofeine Mineralfasern zerfasert wird. Die sodann einer Sammelkammer zugeleiteten Mineralfasern werden in der Regel mit Binde- und/oder Imprägnierungsmitteln benetzt und auf einer unterhalb der Sammelkammer angeordneten Fördereinrichtung, in der Regel handelt es sich hierbei um ein Förderband, abgelegt. Die mit Binde- und/oder Imprägniermitteln benetzten Mineralfasern bilden auf dem Fördermittel ein Mineralfaservlies, welches in nachgeschalteten thermischen und/oder mechanischen Einrichtungen in an sich bekannter Weise bearbeitet wird, um Dämmstoffe in Form von Bahnen, Platten, Formkörpern oder dergleichen herzustellen. Demzufolge bestehen Mineralfaser-Dämmstoffe aus glasig erstarrten Fasern, die mit geringen Bindemitteln punktweise miteinander verbunden sind.

Bei den Dämmstoffen aus Mineralfasern werden solche aus Glaswolle von solchen aus Steinwolle unterschieden. Mineralfaser-Dämmstoffe aus Glaswolle werden aus silikatischen Schmelzen mit relativ hohe Anteilen an Netzwerkwandlern, insbesondere Alkalien und Bor hergestellt. Die Rohstoffe werden in öl- oder gasbefeuerten Wannenöfen aufgeschmolzen. Die Zerfaserung erfolgt beispielsweise mit Hilfe des sogenannten TEL-Verfahrens, bei dem die Schmelze unter Einwirkung von Fliehkräften durch Öffnungen in den Wandungen eines rotierenden Körpers gleitet wird. Mit diesem Verfahren werden relativ lange und glatte Fasem erzeugt.

Steinwolle-Dämmstoffe wurden ursprünglich aus Gesteinen, wie Diabas, Basalt und Kalkstein, Dolomit erschmolzen. Zwischenzeitlich ist man vermehrt dazu übergangen, diese natürlichen Gesteine durch künstliche Gesteine zu ersetzen oder zusammen mit künstlichen Gesteinen dem Schmelzvorgang zuzuführen. In diesen künstlichen Gesteinen werden insbesondere Abfälle der Produktion verarbeitet, wobei die Abfälle auch aus erstarrten Schmelzen bestehen können, die bei der regelmäßigen Entleerung des Schmelzaggregats anfallen. Neben diesen Abfällen werden auch fehlerbehaftete Produktionschargen verarbeitet. Die Abfälle werden in einem ersten Schritt zerkleinert, anschließend mit Portlandzement als Bindemittel und Gesteinssplitt vermischt und schließlich zu künstlichen Gesteinen, sogenannten Formsteinen gepresst.

Die grobkörnigen Gesteine und/oder die entsprechend geformten Formsteine werden zusammen mit grobstückigem Koks als Primärenergieträger in das Schmelz-aggregat, in der Regel in den Kupolofen eingefüllt. Weiterhin werden Zuschläge zugegeben, die ein Korngrößenspektrum von etwa 80 bis 200 mm aufweisen. Durch ein Beaufschlagen der Rohstoff-Koksäule von unten, d. h. nach dem Gegenstromprinzip mit der für die Verbrennung benötigten Luft wird der Koks oberhalb des Ofenbodens abgebrannt. Im Bereich der Lufteinleitung erreicht die Ofentemperatur eine Höhe, bei der die Gesteine und die Zuschläge aufschmelzen. Hierbei erhöht der Anteil bereits glasig erstarrter Abfälle die Schmelzgeschwindigkeit. Nach oben hin sinkt die Temperatur im Ofen ab, da die Wärmeenergie an die Gesteine und den Primärenergieträger abgegeben wird. Gleichzeitig sinkt der Sauerstoffgehalt im Ofen.

Durch eine nachträgliche Erhitzung der Abluft werden schädliche Kohlenstoffverbindungen in weniger schädliche oder unschädliche Verbindungen umgewandelt. Der Energieinhalt der Abluft wird anschließend mit Hilfe von Wärmetauschern an die Verbrennungsluft abgegeben.

Die in das Schmelzaggregat eingebrachten schmelzflüssigen Bestandteile der Rohstoffe sinken auf den Boden des Schmelzaggregates ab. Es kommt hierbei zu einer Saigerung, in der sich das vornehmlich aus den Gesteinen herausreduzierte Eisen am Boden sammelt und die zur Herstellung der Fasern benötigte, spezifisch leichtere Schmelze durch einen oberhalb des Bodens angeordneten Auslass ausgetragen wird. Die hier ausgetragene Schmelze wird anschließend einem Zerfaserungsaggregat zugeführt und zerfasert. Von der dem Zerfaserungsaggregat zugeführten Schmelze wird lediglich ein Anteil von 50% in Fasern umgewandelt. Die gröberen nichtfaserigen Bestandteile werden durch Windsichtung von den faserigen Bestandteilen getrennt.

Das sich im Bereich des Bodens ansammelnde Eisen muß regelmäßig abgelassen werden. Während des Ablassen des Eisens wird die Faserproduktion unterbrochen. Die zu diesem Zeitpunkt im Schmelzaggregat enthaltene Schmelze ist nach erneutem Anfahren des Schmelzaggregates nicht für die direkte Produktion von Dämmstoffen geeignet und wird demzufolge als Abfall im Zuge des Recyclings aufbereitet und der Produktion zugeführt.

Bei dem zumeist in Kupolöfen durchgeführten Schmelzvorgang besteht eine starke Abhängigkeit zwischen der Viskosität und der Temperatur. Ferner ist die Keimbildungszahl und somit die Neigung zur Kristallisation sehr hoch. Diese Eigenschaften führen bei der Bildung der Mineralfasern auf sogenannten Kaskaden-Spinnmaschinen zu relativ kurzen und in sich verwirbelten Mineralfasern. Die einzelnen Mineralfasern selbst sind glasig erstarrt. Aufgrund ihrer Zusammensetzung ist die Temperaturbeständigkeit der Mineralfasern aus einer Gesteinsschmelze höher als bei Dämmstoffen aus Glaswolle.

Von Bedeutung bei der Herstellung und Beurteilung von Mineralfasern ist die Biolöslichkeit, d.h. die Verweildauer der Mineralfasern im menschlichen Organismus. Die Biolöslichkeit von Dämmstoffen aus Steinwolle wird durch den Gehalt von Al₂O₃ maßgeblich beeinflußt. Mit zunehmenden Anteilen Al₂O₃ steigt zum einen die Temperaturbeständigkeit der Fasern und zum anderen in überraschender Weise auch die Biolöslichkeit.

Eine typische Zusammensetzung von biolöslichen Mineralfasern aus Steinwolle weist einen Anteil von SiO₂ zwischen 35 und 43 Masse-%, einen Anteil Al₂O₃ von 17,5 bis 23,5 Masse-%, einen Anteil von TiO₂ von 0,1 bis 3 Masse-%, einen Anteil von FeO von 1,7 bis 9,3 Masse-%, einen Anteil CaO + MgO von 23,5 bis 32 Masse-% und einen Anteil von K₂O + Na₂O von 1,3 bis 7 Masse-% auf.

Für die Wirtschaftlichkeit der als Massenprodukt angewendeten Dämmstoffe aus Steinwolle ist der Einsatz von Rohstoffen bedeutsam, die einen hohen Anteil an Al₂O₃ aufweisen. Natürliche Gesteine enthalten zwar vielfach Alumosilikate, diese liegen aber häufig nicht in den erforderlichen Konzentrationen bzw. nur zusammen mit unerwünschten Mineralien vor. Calcinierte Bauxite sind demgegenüber relativ teuer. Aus diesem Grunde werden vielfach Reststoffe verwertet, die bisher häufig ausschließlich deponierfähig waren und die wegen des Gehaltes an löslichen Stoffen nicht unerhebliche Risiken für die Umwelt darstellen. Gleichzeitig werden diese Reststoffe, die beispielsweise bei der Steinwolle-Herstellung anfallen, in Form von Schmelzenresten, abgetrennten, nicht faserigen Partikeln, Filterstäuben, fehlerhaften Produktionen oder dergleichen in einem primären Reststoff-Kreislauf fast vollständig wiederverwertet. Diese Reststoffe werden vor ihrer Verwertung entsprechend den Anforderungen der maschinellen Einrichtung, insbesondere der Schmelzaggregate aufbereitet. Beispielsweise werden die Reststoffe zur Verwertung zerkleinert und in unterschiedlichen Korngrößen miteinander bzw. mit anderen splittigen Rohstoffen vermischt, mit Bindemitteln, wie beispielsweise Zement versetzt und zu ausreichend großen Formkörpern verpresst, bevor diese Formkörper als grobstückige Rohstoffe einem Schachtofen bzw. einem Kupolofen zugeführt werden. Aus der EP 0 765 295 C1 ist beispielsweise bekannt, geeignete Formkörper aus feinkörnigen Rohstoffen auch mit Hilfe von Lignin zu binden. In der WO 94/12007 werden entsprechende Formköper mit molassehaltigem Bindemittel beschrieben.

Wie bereits ausgeführt wird als Primärenergieträger Koks eingesetzt. Die für das Aufschmelzen der Rohstoffe erforderliche Primärenergie beträgt bis zu 2 Megawatt pro Tonne Schmelze. Je nach Herkunft der für die Verkokung verwendeten Kohle beträgt der Gehalt an anorganischen Bestandteilen des Kokses (Aschegehalt) zwischen 6 und 10 Masse-%. Die nichtbrennbaren Bestandteile des Kokses werden in die silikatische Schmelze eingebunden.

Aus der US 4 822 388 ist es bekannt, den Koks zumindest überwiegend durch eine Ofenauskleidung von Öfen für die Herstellung von Aluminium zu ersetzen. Hierbei wird ein vollständiger Ersatz des Kokses als erstrebenswert dargestellt, wobei aber zumindest 60% des Primärenergieträgers aus den Rückständen der Ofenauskleidung bestehen soll.

Ausgehend von diesem Stand der Technik liegt der Aufgabe die Aufgabe zugrunde, ein erfindungsgemäßes Verfahren derart weiterzuentwickeln, dass durch die Verwendung kostengünstiger Primärenergieträger ein preiswerteres Verfahren durchgeführt werden kann, welches gleichzeitig aber gute Schmelzresultate ohne Verunreinigungen der Schmelze erbringt.

**Gelöst** wird diese Aufgabe durch ein Verfahren zur Herstellung von Dämmstoffen aus Mineralfasern, insbesondere aus Glas- und/oder Steinwolle, bei dem in einem Schmelzaggregat, insbesondere einem Kupolofen eine silikatische Schmelze hergestellt und in einer Zerfaserungseinrichtung in vorzugsweise mikrofeine Fasern zerfasert wird und die Fasern auf einer Fördereinrichtung als Vlies abgelegt werden, wobei ein Primärenergieträger stückig mit Gesteinen dem Schmelzaggregat zugeführt und säulenartig im Schmelzaggregat angeordnet wird, und wobei den Fasern vorzugsweise Binde- und/oder Imprägnierungsmittel zugesetzt werden, welches dadurch gekennzeichnet ist, dass als Primärenergieträger Petrolkoks verwendet wird, wobei der Petrolkoks mit bis zu 75 % eines Gemenges mit Koks verwendet wird.

Beim thermischen Kracken von Erdölen entstehende Rückstände aus fast reinem Kohlenstoff werden beispielsweise als Feuerungsmaterial bei der Herstellung von Spezialstählen verwendet. Beispielsweise handelt es sich hierbei um Petrolkoks, der im sogenannten Delayed-Cooking-Verfahren, einem endothermen Verfahren hergestellt wird. Diesem Verfahren werden Rückstände aus der Rohöldestillation, beispielsweise von schwerem Heizöl in einem Ofen schnell aufgeheizt und anschließend in einer Reaktionszone bei bestimmten Temperatur- und Druckverhältnissen eingeleitet. Der beim Verlassen des Ofens gekrackte und zum Teil verdampfte Rückstand wird in der Reaktionszone in flüchtige Kohlenwasserstoffe und Petrolkoks konvertiert. Üblicherweise fällt dieser Petrolkoks stückig mit Korngrößen zwischen 1 und 300 mm an.

Der erfindungsgemäß bei der Herstellung von Dämmstoffen aus Mineralfassern zu verwendende Petrolkoks ist-ein sehr hartes, rohes Kohlenstoffprodukt mit folgenden charakteristischen Eigenschaften:

| Heizwert | 30.000 bis 40.000 kJ/kg |
|---|---|
| Wassergehalt | ≤ 12% |
| Aschegehalt | ≤ 1% |
| Flüchtige Bestandt. | ≤ 12% |
| Schwefel | ≤3,5% |

Nach einem weiteren Merkmal der Erfindung ist vorgesehen, dass der Petrolkoks den üblichen Primärenergieträger Gießereikoks bei der Herstellung von Dämmstoffen aus Mineralfasern teilweise substituiert. Hierbei hat sich ein Petrolkoks in stückiger Form mit Korngrößen zwischen 50 und 300 mm als besonders vorteilhaft erwiesen.

Insgesamt kann ein als Primärenergieträger dienendes Gemenge bis zu 75 % aus Petrolkoks bestehen, wobei die verbleibenden 25 % weiterhin als Gießereikoks eingesetzt werden.

Vorzugsweise wird der Petrolkoks im Kupolofen weiter aufkalziniert, d.h. der Petrolkoks verliert sein Restwasser und reichert das Gichtgas mit Kohlenwasserstoffen an. Diese Kohlenwasserstoffe führen zu einer Erhöhung der latenten Wärme im Abgas und werden in nachfolgenden Nachverbrennungsanlagen zusammen mit dem erzeugten Kohlenmonoxyd zu CO₂ oxidiert. Der Energiebedarf der Nachverbrennungsanlagen wird hierdurch reduziert.

Gleichzeitig durchläuft der Petrolkoks Temperaturzonen, die zu einer Kalzinierung des Petrolkokses führen. Die Kalzinierung erfolgt in einem endothermen Prozess, nämlich einem Pyrolyseprozess, bei dem unter Ausschluss von Sauerstoff oder in einer reduzierenden Atmosphäre bei Temperaturen von 1250 bis 1500°C ein Anteil an Kohlenwasserstoffen reduziert wird. Während des Pyrolyseprozesses finden die Verfahrensschritte Aufheizen, Trocknen, Austreiben und Sintern statt. Gleichzeitig zur Kalzinierung erfolgt eine teilweise Entschwefelung des Kokses. Dabei kann aber nur der thermisch nicht stabile Schwefel, der ca. 50 % des Gesamtschwefelgehaltes des Petrolkokses ausmacht, entfernt werden. Eine Anreicherung der Gichtgase mit schwefelhaltigen Verbindungen kann bei Bedarf durch Additiveinträge in das Gichtgas, beispielsweise Ca(OH)₂ reduziert werden. Nach einem weiteren Merkmal der Erfindung ist vorgesehen, dass die bei der Erwärmung des Petrolkokses frei werdenden Kohlenwasserstoffe zum Teil verbrannt werden und damit zur notwendigen Prozesswärme beitragen. Die verbleibenden Kohlenwasserstoffe werden in der thermischen Nachverbrennung verbrannt.

Kern der Erfindung ist die Substitution des konventionellen Primärenergieträgers durch stückigem Petrolkoks, wobei bis zu 75 % des konventionellen Primärenenergieträgers, beispielsweise Gießereikoks durch Petrolkoks ersetzt werden können. Der Petrolkoks wird im Kupolofen verschiedenen Temperaturzonen ausgesetzt, durch welche ein natürlicher Kalziniervorgang des Petrolkokses mit hoher Dichte durchgeführt wird, wobei der Petrolkoks neben der Eigenschaft des Energieträgers auch eine Stützfunktion im Kupolofensumpf hat.

Weitere Merkmale des erfindungsgemäßen Verfahrens bzw. der erfindungsgemäßen Schmelze ergeben sich aus den Unteransprüchen und der nachfolgenden Beschreibung eines bevorzugten Ausführungsbeispiels.

### Ausführungsbeispiel

Einem Kupolofen wird zur Erzeugung einer Schmelze ein grobstückiges Aufgabegut zugeführt, das jeweils zur Hälfte aus einem Primärenergieträger und Gesteinen als Rohstoff für eine silikatische Schmelze besteht. Die Gesteine enthalten 85% Kunststeine und 15% natürliche Steine, wie Diabas und Basalt. Die Kunststeine bestehen zu 60% aus Recyclingmaterial und zu 40% aus rückgebauten Mineralfazer-Dämmstoffen, wobei das Recyclingmaterial dem Produktionsprozeß in Form von Abschnitten bzw.qualitativ-minderwertigen Produkten entnommen wird. Die Kunststeine werden aus feinkörnigem Material und den für die Kunststeine erforderlichen Feststoffen zusammen mit als Stützkorn verwendeten Gesteinen mit latenthydraulischen Stoffen zu grobstückigen Körpern verpresst.

Der Primärenergieträger besteht zu 70% aus Petrolkoks und zu 30% aus Gießereikoks.

Der Petrolkoks hat einen Heizwert von 35.000 kJ/kg, einen Wassergehalt von 8%, einen Aschegehalt von 0,75%, einen Schwefelgehalt von 2% und 11% flüchtige Bestandteile.

Der in dem Kupolofen angeordneten Säule aus Rohstoff und Primärenergieträger wird im Gegenstromprinzip die benötigte Verbrennungsluft zugeführt, so dass der Primärenergieträger oberhalb des Schachtbodens abbrennt. Im Bereich der Einleitung der Verbrennungsluft erreicht die Temperatur im Kupolofen Werte, die für das Aufschmelzen des Rohstoffs ausreichen.

Die aus dem Kupolofen abgeführte und einem Zerfaserungsaggregat zugeführte Schmelze besteht aus einem Anteil SiO₂ von 38 Masse-%, einem Anteil Al₂O₃ von 22 Masse-%, einem Anteil von TiO₂ von 2,6 Masse-%, einem Anteil von FeO von 3,4 Masse-%, einem Anteil CaO + MgO von 31,5 Masse-% und einen Anteil von K₂O + Na₂O von 2,5 Masse-%. Aus dieser Schmelze hergestellte Mineralfasern für Dämmstoffe sind als biolöslich klassifiziert.

## Patentansprüche

1. Verfahren zur Herstellung von Dämmstoffen aus Mineralfasern, insbesondere aus Glas- und/oder Steinwolle, bei dem in einem Schmelzaggregat, insbesondere einem Kupolofen eine silikatische Schmelze hergestellt und in einer Zerfaserungseinrichtung in vorzugsweise mikrofeine Fasern zerfasert wird und die Fasern auf einer Fördereinrichtung als Vlies abgelegt werden, wobei ein Primärenergieträger stückig mit Gesteinen dem Schmelzaggregat zugeführt und säulenartig im Schmelzaggregat angeordnet wird, und wobei den Fasern vorzugsweise Binde- und/oder Imprägnierungsmittel zugesetzt werden,
**dadurch gekennzeichnet,**
**dass** als Primärenergieträger Petrolkoks verwendet wird, wobei der Petrolkoks mit bis zu 75 % eines Gemenges mit Koks verwendet wird.

2. Verfahren nach Anspruch 1, **dadurch gekennzeichnet, dass** der Petrolkoks folgende Eigenschaften und/oder Bestandteile aufweist:
| Heizwert | 30.000 bis 40.000 kJ/kg |
|---|---|
| Wassergehalt | ≤ 12 % |
| Aschegehalt | ≤ 1 % |
| Flüchtige Bestandteile | ≤ 12 % |
| Schwefel | ≤ 3,5 % |

3. Verfahren nach Anspruch 1, **dadurch gekennzeichnet, dass** der Petrolkoks eine Korngrößenverteilung von 1 bis 300 mm, insbesondere von 50 bis 300 mm aufweist.

4. Verfahren nach Anspruch 1, **dadurch gekennzeichnet, dass** der Petrolkoks in einem Kupolofen in einem Pyrolyseprozess aufkalziniert wird.

5. Verfahren nach Anspruch 4, **dadurch gekennzeichnet, dass** der Pyrolyseprozess unter Ausschluss von Sauerstoff oder in einer reduzierenden Atmosphäre bei Temperaturen zwischen 1.250 und 1.500° C durchgeführt wird.

6. Verfahren nach Anspruch 4, **dadurch gekennzeichnet, dass** der Petrolkoks während des Pyrolyseprozesses entschwefelt wird.

7. Verfahren nach Anspruch 4, **dadurch gekennzeichnet, dass** bei einer Kalzinierung entstehender Kohlenwasserstoff und/oder schwefelhaltige Verbindungen einem Gichtgas zugeführt und der Kohlenwasserstoff in einer nachfolgenden Verbrennungsanlage zu CO₂ oxidiert wird.

8. Verfahren nach Anspruch 7, **dadurch gekennzeichnet, dass** die schwefelhaltigen Verbindungen im Gichtgas durch beispielsweise Ca(OH)₂ reduziert werden.

9. Verfahren nach Anspruch 7, **dadurch gekennzeichnet, dass** Teile der bei der Erwärmung des Petrolkokses frei werdenden Kohlenwasserstoffe verbrannt und zur Steigerung der Prozesswärme genutzt und die verbleibenden Kohlenwasserstoffe in einer thermischen Nachverbrennung verbrannt werden.

10. Verfahren nach Anspruch 1, **dadurch gekennzeichnet, dass** die Rückstände des Petrolkokses in Formsteine für die Herstellung der Schmelze eingebunden werden.

## Claims

1. Method for producing insulating materials made of mineral fibers, in particular made of glass and/or stone wool for which a silicate melt is produced in a melting aggregate, in particular a cupola furnace, and is defibrated in a defibrator into preferably microfine fibers and the fibers are placed on a conveyor device as non-woven, whereby a primary energy source is fed lumpy with rocks to the melting aggregate and is placed like a column in the melting aggregate and whereby preferably binding and/or impregnating agents are added to the fibers,
**characterized in that** pet coke is used as primary energy source, whereby the pet coke is used with up to 75% of a batch with coke.

2. Method according to claim 1, **characterized in that** the pet coke has the following properties and/or constituent parts:
| Calorific value | 30000 to 40000 kJ/kg |
|---|---|
| Water content | ≤ 12 % |
| Ash content | ≤ 1 % |
| Volatile components | ≤ 12 % |
| Sulfur | ≤ 3,5 % |

3. Method according to claim 1, **characterized in that** the pet coke has a particle size distribution of 1 to 300 mm, in particular of 50 to 300 mm.

4. Method according to claim 1, **characterized in that** the pet coke is calcined in a cupola furnace in a pyrolysis process.

5. Method according to claim 4, **characterized in that** the pyrolysis process is carried out under exclusion of oxygen or in a reduced atmosphere at temperatures between 1250 and 1500°C.

6. Method according to claim 4, **characterized in that** the pet coke is desulfurized during the pyrolysis process.

7. Method according to claim 4, **characterized in that** hydrocarbon resulting from a calcination and/or sulfur compounds are fed to a blast furnace gas and the hydrocarbon oxidises to CO₂ in a subsequent combustion installation.

8. Method according to claim 7, **characterized in that** the sulfur containing compounds are reduced in the blast furnace gas by for example Ca(OH)₂.

9. Method according to claim 7, **characterized in that** parts of the hydrocarbon becoming free during heating up the pet coke are burnt and are used for increasing the process warmth and the remaining hydrocarbons are burnt in a thermal post-combustion.

10. Method according to claim 1, **characterized in that** the residues of the pet coke are embedded into moulded blocks for producing the melt.

## Revendications

1. Procédé de fabrication de matériaux isolants en fibres minérales, en particulier en laine de verre et/ou de roche, pour lequel une masse de silicate fondu est produite dans un agrégat de fonte, en particulier dans un cubilot, et est défibrée en fibres de préférence microfines dans un dispositif de défibrage et les fibres sont déposées en tant qu'intissé sur un dispositif de transport, cependant qu'une source d'énergie primaire est amenée en une partie avec des pierres à l'agrégat de fonte et est placée à la manière d'une colonne dans l'agrégat de fonte et cependant que de préférence des liants et/ou substances d'imprégnation sont ajoutés aux fibres,
**caractérisé en ce**
**que** du coke de pétrole est utilisé comme source d'énergie primaire, le coke de pétrole étant utilisé avec jusqu'à 75% d'un mélange avec du coke.

2. Procédé selon la revendication 1, **caractérisé en ce que** le coke de pétrole présente les propriétés et/ou les constituants suivants :
| Valeur de chauffage | 30000 à 40000 kJ/kg |
|---|---|
| Teneur en eau | ≤ 12 % |
| Teneur en cendres | ≤ 1 % |
| Constituants volatils | ≤ 12 % |
| Soufre | ≤ 3,5 % |

3. Procédé selon la revendication 1, **caractérisé en ce que** le coke de pétrole présente une répartition granulométrique de 1 à 300 mm, en particulier de 50 à 300 mm.

4. Procédé selon la revendication 1, **caractérisé en ce que** le coke de pétrole est calciné dans un cubilot dans un processus de pyrolyse.

5. Procédé selon la revendication 4, **caractérisé en ce que** le processus de pyrolyse est exécuté en l'absence d'oxygène ou dans une atmosphère réduite à des températures entre 1250 et 1500 °C.

6. Procédé selon la revendication 4, **caractérisé en ce que** le coke de pétrole est désulfuré pendant le processus de pyrolyse.

7. Procédé selon la revendication 4, **caractérisé en ce que** des hydrocarbures qui se forment lors d'une calcination et/ou des composés sulfurés sont amenés à un gaz de gueulard et les hydrocarbures sont oxydés en CO₂ dans une installation de combustion qui suit.

8. Procédé selon la revendication 7, **caractérisé en ce que** les composés sulfurés dans le gaz de gueulard sont réduits par exemple par du Ca(OH)₂.

9. Procédé selon la revendication 7, **caractérisé en ce que** des parties des hydrocarbures libérés lors du réchauffement du coke de pétrole sont brûlées et utilisées pour augmenter la chaleur de traitement et les hydrocarbures qui restent sont brûlés dans une postcombustion thermique.

10. Procédé selon la revendication 1, **caractérisé en ce que** les résidus du coke de pétrole sont incorporés à des briques moulées pour la production de la masse fondue.
